# EUROPÄISCHE PATENTSCHRIFT

(11) **EP 1 170 528 B1**
(45) Veröffentlichungstag und Bekanntmachung des Hinweises auf die Patenterteilung: **02.11.2005**
(21) Anmeldenummer: 01114080.3
(22) Anmeldetag: 09.06.2001
(51) Int. Cl.: F16H 37/04, F16H 57/02

(54) **Planetengetriebe mit Vorgelege**
Planetary gearing with auxiliary gearing
Engrenage planétaire avec engrenage auxiliaire

(30) Priorität: 07.07.2000 DE 10032626
(43) Veröffentlichungstag der Anmeldung: 09.01.2002
(73) Patentinhaber: A. FRIEDR. FLENDER AG, 46395 Bocholt (DE)
(72) Erfinder: Hulshof, Frans, 7102 KD-Winterswijk (NL)
(74) Vertreter: Radünz, Ingo

(56) Entgegenhaltungen:
- DE-A- 3 302 049
- GB-A- 2 123 315

## Beschreibung

Die Erfindung betrifft ein Planetengetriebe mit einem an die Welle des Sonnenrades angeschlossenen Vorgelege mit den Merkmalen des Oberbegriffes des Patentanspruches 1, wie bekannt aus GB-A-2123315.

Derartige Planetengetriebe weisen eine einstufige Planetenstufe mit einem meist zweistufigen Stirnrad- und/oder Kegelradgetriebe als Vorlegegetriebe auf. Diese Getriebe werden vorwiegend mit einer vorgegebenen Lastrichtung betrieben. Kurzzeitig ist auch eine Umkehr der Lastrichtung bei Anfahr- und Bremsvorgängen zulässig. Bevorzugte Einsatzgebiete dieser Getriebe sind die Anwendungen als Windgetriebe, Vertikalmühlengetriebe oder Schaufelradgetriebe.

Um ein querkraftfreies Drehmoment in die erste Planetenstufe einleiten zu können, sind bei den bekannten einstufigen Planetengetrieben die vorgeschalteten Stirnrad- oder Kegelradstufen über ein Gelenk in der Form einer Zahnkupplung mit der Welle des Sonnenrades verbunden (GB-A-2 123 315). Die als Einfach- oder Doppelzahnkupplung mit oder ohne ballige Verzahnung ausgebildete Zahnkupplung soll eine freie Einstellung des Sonnenrades bewirken. Eine solche Zahnkupplung ist ein teures und verhältnismäßig störanfälliges Bauteil. Nachteilig ist bei den bekannten Planetengetrieben weiterhin, dass die das Zahnrad des Vorgeleges tragende Welle in dem Getriebegehäuse in zwei Lagern gelagert werden muss. Diese Lager bedeuten zusammen mit der Zahnkupplung eine erhöhte Anzahl von Bauteilen, die einen erheblichen Aufwand für die Schmierung erfordern.

Aus der US-A-4 114 479 ist ein Planetengetriebe mit einem Vorgelege bekannt, bei dem das Sonnenrad des Planetengetriebes und das Zahnrad des Vorgeleges von einer starren, horizontal angeordneten Welle getragen ist. Diese Sonnenradwelle ist starr gelagert. Der Belastungsäusgleich aus der Querkraft des Vorgeleges wird durch den Planetenträger bewirkt, der schwimmend in dem Getriebegehäuse angeordnet ist.

Der Erfindung liegt die Aufgabe zugrunde, das gattungsgemäße Planetengetriebe derart zu gestalten, dass es weniger störanfällig ist und weniger Bauteile benötigt.

Die Aufgabe wird bei einem gattungsgemäßen Planetengetriebe erfindungsgemäß durch die kennzeichnenden Merkmale des Patentanspruches 1 gelöst. Vorteilhafte Ausgestaltungen der Erfindung sind Gegenstand der Unteransprüche.

Dadurch dass erfindungsgemäß für das Zahnrad des Vorgelegetriebes und das Sonnenrad eine gemeinsame Welle, nämlich die Sonnenradwelle, verwendet wird, kann im Vergleich zum Stand der Technik bei gleicher Funktionsweise des Planetengetriebes auf eine eigene Welle für das Zahnrad des Vorgelegetriebes und auf eine Zahnkupplung zur Verbindung mit der Sonnenradwelle verzichtet werden. Durch die besondere Gestaltung des einzigen Lagers der gemeinsamen Welle kann ein zweites Lager entfallen. Die Vorteile des erfindungsgemäßen Planetengetriebes liegen damit in einem einfacheren, weniger störanfälligen und kompakteren Aufbau.

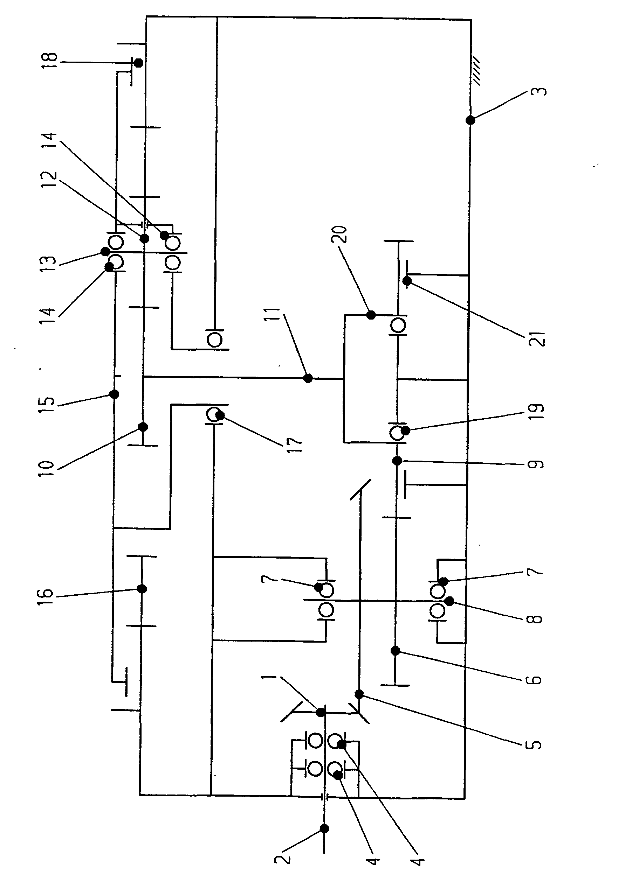

Ein Ausführungsbeispiel der Erfindung ist in der Zeichnung dargestellt und wird im Folgenden näher erläutert. Die Zeichnung zeigt schematisch ein Planetengetriebe mit Vorlegegetriebe.

Das dargestellte Getriebe umfasst ein Planetengetriebe, dem ein Vorlegegetriebe vorgeschaltet ist. Das Vorlegegetriebe ist vorzugsweise zweistufig ausgebildet und enthält in der ersten Getriebestufe ein Kegelritzel 1, das auf einer Kegelritzelwelle 2 angeordnet ist. Die Kegelritzelwelle 2 ist innerhalb eines das Getriebe umschließenden Gehäuses 3 in zwei Radialwälzlagern 4 gelagert. Das Kegelritzel 1 steht mit einem Kegelrad 5 in Eingriff, das zusammen mit einem Zahnritzel 6 auf einer in zwei Radialwälzlagern 7 gelagerten Kegelradwelle 8 angeordnet ist.

Das Zahnritzel 6 steht mit einem Zahnrad 9 in Eingriff, wodurch die zweite Getriebestufe gebildet wird. Das Zahnritzel 6 und das Zahnrad 9 sind als Stirnräder mit einer Gerad- oder einer Schrägverzahnung ausgebildet. Die erste Getriebestufe kann auch anstelle der beschriebenen Kegelradstufe eine Stirnradstufe sein. Die erste Getriebestufe kann auch entfallen, wobei die verbleibende eine Getriebestufe als Kegelrad- oder als Stirnradstufe ausgebildet sein kann.

Das Planetengetriebe besteht aus einem Zentralritzel oder Sonnenrad 10, das aus einer Sonnenradwelle 11 herausgearbeitet ist. Das Sonnenrad 10 steht mit drei oder mehr Planetenrädern 12 in Eingriff, deren Planetenwellen 13 über jeweils zwei Planetenwälzlager 14 in einem Planetenträger 15 gehalten sind. Die Planetenräder 12 stehen mit einem gehäusefesten Hohlrad 16 in Eingriff. Der Planetenträger 15 ist in einem oder auch zwei Radialwälzlagern 17 in dem Gehäuse 3 gelagert und über ein Axialgleitlager 18 vorzugsweise auf dem Gehäuse 3 abgestützt.

Das Gehäuse 3 kann in dem Bereich des Axialgleitlagers 18 wannenförmig ausgebildet sein. Diese Gehäuseform gestattet wahlweise die Aufnahme eines Radialgleitlagers, wodurch das genannte Radialwälzlager des Planetenträgers entfallen kann. Zweckmäßerweise ist das Radialgleitlager so gestaltet, dass sich die rotierende Gleitlagerfläche an der Unterseite des flanschartigen Abtriebs des Planetenträgers 15 befindet. Die zweite Gleitlagerfläche besteht aus einem Teil der zylindrischen Mantelfläche des Hohlrades 16. Die Vorteile dieser Alternativlagerung sind die Nutzung des lokalen Ölsumpfs in dem wannenförmigen Gehäusebereich und die mechanische Entlastung der hochbelasteten Stege des Planetenträgers 15.

Die Sonnenradwelle 11, die starr, das heißt relativ biegesteif ausgelegt ist, trägt sowohl das Sonnenrad 10 als auch das Zahnrad 9 des Vorlegegetriebes. Das das Zahnrad 9 tragende Ende der Sonnenradwelle 11 ist tellerförmig gestaltet und fest mit dem Zahnrad 9 verbunden, das kranzförmig ausgebildet ist.

Die dem Zahnrad 9 des Vorlegegetriebes und dem Sonnenrad 10 gemeinsame Sonnenradwelle 11 ist in einem einzigen als Radialwälzlager ausgebildeten Lager 19 gelagert. Um die gesamte Axialkraft der aus dem Zahnrad 9, dem Sonnenrad 10 und der Sonnenradwelle 11 bestehenden Einheit aufnehmen zu können, ist das Lager 19 vorzugsweise als Festlager ausgebildet.

Das Lager 19 ist innerhalb des kranzfömigen Zahnrades 9 und der tellerförmigen Erweiterung 20 der Sonnenradwelle 11 angeordnet. Diese tellerförmige Erweiterung 20 ist ein Teil der Sonnenradwelle 11 und kann in der Weise hergestellt werden, dass die hohlwellenartige Sacklochbohrung für das Lager 19 aus einem geschmiedeten flanschartigen Ende der Sonnenradwelle 11 herausgearbeitet wird.

Das Lager 19 ist abhängig von den Kraftkomponenten der Zahnkraft am Zahnrad 9 so positioniert, dass die Wirkungslinie der resultierenden Zahnkraft des Zahnrades 9 in dem Mittel- oder Wirkpunkt des Lagers 19 abgestützt ist. Ist das Zahnrad 9 mit einer Geradverzahnung versehen, so erfolgt die Abstützung der resultierenden Zahnkraft genau in dem Mittel- oder Wirkpunkt des Lagers 19. Weist das Zahnrad 9 eine Schrägverzahnung auf, oder ist das Zahnrad 9 ein Kegelrad und ist die Lastrichtung konstant, so lässt sich die Wirkungslinie der resultierenden Zahnkraft des Zahnrades 9 annähernd in dem Mittel- oder Wirkpunkt des Lagers 19 abstützen. Die Auswahl der Größe des Lagers 19 hat gelegentlich auftretende Änderungen der Axialkräfte in entgegengesetzter Richtung bei Anfahr- und Bremsvorgängen zu berücksichtigen.

Weist das Zahnrad 9 eine Schrägverzahnung auf, so kann das Zahnrad 9 auf der dem Sonnenrad 10 abgewandten Seite über ein Axialgleitlager 21 an dem Gehäuse 3 abgestützt sein. Hierdurch werden die bei schrägverzahnten Stirnrädern und bei Kegelrädern auftretenden Zusatzkräfte direkt oder annähernd direkt unter dem Kraftangriffspunkt aufgefangen.

Bei den gemäß dem Stand der Technik üblichen Genauigkeiten und den vorhandenen Elastizitäten und Spielen ist eine einwandfreie Abwälzung der Sonnenrades 10 auf den Planetenrädern 12 gewährleistet.

In der Planetenstufe des beschriebenen Planetengetriebes kann sich das Sonnenrad 10 entsprechend den Ungenauigkeiten der Fertigung und den elastischen Verformungen frei einstellen, so dass die freie radiale Beweglichkeit erhalten bleibt. Bei einer Vorgelegestufe mit geradverzahnten Stirnrädern hat die Verzahnung des Sonnenrades 10 nur eine Führungsfunktion und ist frei von Reaktionskräften. Am Sonnenrad 10 wirken in diesem Fall nur noch Kräfte aus den Zahneingriffen mit den Planetenrädern 12. Bei Stirnrädern mit Schrägverzahnung und bei Kegelrädern als Vorgelegestufe hat die Verzahnung des Sonnenrades 10 eine Lagerfunktion. Die Lastwechselzahl der Lagerkraft für die Planetenstufe ist jedoch hierbei gering.

## Patentansprüche

1. Planetengetriebe mit einem radial frei einstellbaren Sonnenrad (10), dessen Sonnenradwelle (11) an ein Vorgelege angeschlossen und mit einem Zahnrad (9) des Vorgeleges gekoppelt ist, wobei die Sonnenradwelle (11) das Zahnrad (9) des Vorgeleges trägt, und die dem Sonnenrad (10) und dem Zahnrad (9) gemeinsame Sonnenradwelle (11) in einer Lagerung gelagert ist, die an dem Gehäuse (3) des Planetengetriebes direkt abgestützt abgestützt ist, **dadurch gekennzeichnet, dass** die dem Sonnenrad (10) und dem Zahnrad (9) gemeinsame Sonnenradwelle (11) starr ausgelegt ist, dass die Lagerung aus einem einzigen als Radialwälzlager ausgebildeten Lager (19) besteht und dass die Wirkungslinie der resultierenden Zahnkraft aus dem Vorgelege in oder annähernd in dem Mittel- oder Wirkpunkt dieses Lagers (19) abgestützt ist.

2. Planetengetriebe nach Anspruch 1, **dadurch gekennzeichnet, dass** das Lager (19) als Festlager ausgebildet ist.

3. Planetengetriebe nach Anspruch 1 oder 2, **dadurch gekennzeichnet, dass** bei der Ausbildung des auf der Sonnenradwelle (11) angebrachten Zahnrades (9) als geradverzahntes Stirnrad die theoretische Wirkungslinie der resultierenden Zahnkraft aus dem Vorgelege genau in dem Wirkpunkt des Lagers (19) abgestützt ist.

4. Planetengetriebe nach Anspruch 1 oder 2, **dadurch gekennzeichnet, dass** bei der Ausbildung des auf der Sonnenradwelle (11) angebrachten Zahnrades (9) als Kegelrad oder als schrägverzahntes Stirnrad die theoretische Wirkungslinie der resultierenden Zahnkraft aus dem Vorgelege annähernd in dem Wirkpunkt des Lagers (19) abgestützt ist.

5. Planetengetriebe nach einem der Ansprüche 1 bis 4, **dadurch gekennzeichnet, dass** bei der Ausbildung des auf der Sonnenradwelle (11) angebrachten Zahnrades (9) als Kegelrad oder als schrägverzahntes Stirnrad das Lager (19) schwenkbeweglich in einer tellerförmigen Erweiterung (20) der Sonnenradwelle (11) gehalten ist.

6. Planetengetriebe nach einem der Ansprüche 1 bis 5, **dadurch gekennzeichnet, dass** bei der Ausbildung des auf der Sonnenradwelle (11) angebrachten Zahnrades (9) als Kegelrad oder als schrägverzahntes Stirnrad dieses Zahnrad (9) auf der dem Sonnenrad (10) abgewandten Seite über ein Axialgleilager (21) in dem Gehäuse (3) abgestützt ist.

7. Planetengetriebe nach einem der Ansprüche 1 bis 6, **dadurch gekennzeichnet, dass** der Planetenträger (15) auf einen Radialgleitlager an der zylindrischen Mantelfläche des Hohlrades (16) abgestützt ist und dass das Radialgleitlager in einem wannenförmigen, der Schmierung des Radialgleitlagers dienenden Gehäusebereich angeordnet ist.

## Claims

1. Planetary gear with a radially freely settable sunwheel (10), the sunwheel shaft (11) of which is connected with a reduction gear and is coupled with a gearwheel (9) of the reduction gear, wherein the sunwheel shaft (11) carries the gearwheel (9) of the reduction gear and the sunwheel shaft (11) common to the sunwheel (10) and the gearwheel (9) is mounted in a bearing which is directly supported at the housing (3) of the planetary gear, **characterised in that** the sunwheel shaft (11) common to the sunwheel (10) and the gearwheel (9) is designed to be rigid, that the bearing consists of a single bearing (19) constructed as a radial roller bearing and that the line of action of the resultant tooth force from the reduction gear is supported at or approximately at the centre point or effective point of this bearing (19).

2. Planetary gear according to claim 1, **characterised in that** the bearing (19) is constructed as a fixed bearing.

3. Planetary gear according to claim 1 or 2, **characterised in that** in the case of construction of the gearwheel (9), which is mounted on the sunwheel shaft (11), as a straight toothed spur gear the theoretical line of action of the resultant tooth force from the reduction gear is supported exactly at the effective point of the bearing (19).

4. Planetary gear according to claim 1 or 2, **characterised in that** in the case of construction of the gearwheel (9), which is mounted on the sunwheel shaft (11), as a bevel gear or as an obliquely toothed spur gear the theoretical line of action of the resultant tooth force from the reduction gear is supported approximately at the effective point of the bearing (19).

5. Planetary gear according to one of claims 1 to 4, **characterised in that** in the case of construction of the gearwheel (9), which is mounted on the sunwheel shaft (11), as a bevel gear or as an obliquely toothed spur gear the bearing (19) is mounted in a plate-shaped enlargement (20) of the sunwheel shaft (11) to be pivotably movable.

6. Planetary gear according to one of claims 1 to 5, **characterised in that** in the case of construction of the gearwheel (9), which is mounted on the sunwheel shaft (11), as a bevel gear or as an obliquely toothed spur gear this gearwheel (9) is supported on the side, which is remote from the sunwheel (10), in the housing (3) by way of an axial slide bearing (21).

7. Planetary gear according to one of claims 1 to 6, **characterised in that** the pinion cage (15) is supported on a radial slide bearing at the cylindrical circumferential surface of the crown wheel (16) and that the radial slide bearing is arranged in a trough-shaped housing region serving for lubrication of the radial slide bearing.

## Revendications

1. Engrenage planétaire comprenant une roue solaire (10) librement réglable dans la direction radiale, dont l'arbre de roue solaire (11) est raccordé à un renvoi et accouplé avec une roue dentée (9) de ce dernier, l'arbre de roue solaire (11) supportant la roue dentée (9) du renvoi et l'arbre de roue solaire (11), commun à la roue solaire (10) et à la roue dentée (9), étant logé dans un support qui est supporté directement sur le carter (3) de l'engrenage planétaire, **caractérisé en ce que** l'arbre de roue solaire (11), commun à la roue solaire (10) et à la roue dentée (9), a une conception rigide, que le support est constitué d'un palier unique (19) réalisé sous forme de palier de roulement radial, et que la ligne d'action de l'effort de denture résultant du renvoi est supportée dans ou approximativement au centre ou point d'action de ce palier (19).

2. Engrenage planétaire suivant la revendication 1, **caractérisé en ce que** le palier (19) est configuré sous forme de palier fixe.

3. Engrenage planétaire suivant l'une des revendications 1 et 2, **caractérisé en ce que**, avec la réalisation de la roue dentée (9) montée sur l'arbre de roue solaire (11) sous forme de roue droite à denture droite, la ligne d'action théorique de l'effort de denture résultant du renvoi est supportée exactement dans le point d'action du palier (19).

4. Engrenage planétaire suivant l'une des revendications 1 et 2, **caractérisé en ce que**, avec la réalisation de la roue dentée (9) montée sur l'arbre de roue solaire (11) sous forme de roue conique ou de roue droite à denture hélicoïdale, la ligne d'action théorique de l'effort de denture résultant du renvoi est supportée approximativement dans le point d'action du palier (19).

5. Engrenage planétaire suivant l'une des revendications 1 à 4, **caractérisé en ce que**, avec la réalisation de la roue dentée (9) montée sur l'arbre de roue solaire (11) sous forme de roue conique ou de roue droite à denture hélicoïdale, le palier (19) est maintenu mobile en pivotement dans un élargissement (20) en forme de disque de l'arbre de roue solaire (11).

6. Engrenage planétaire suivant l'une des revendications 1 à 5, **caractérisé en ce que**, avec la réalisation de la roue dentée (9) montée sur l'arbre de roue solaire (11) sous forme de roue conique ou de roue droite à denture hélicoïdale, cette roue dentée (9) est supportée sur le côté opposé à la roue solaire (10) par l'intermédiaire d'un palier lisse de butée (21) dans le carter (3).

7. Engrenage planétaire suivant l'une des revendications 1 à 6, **caractérisé en ce que** le porte-satellites (15) est supporté sur un palier lisse radial sur la surface d'enveloppe cylindrique de la roue à denture intérieure (16) et que le palier lisse radial est disposé dans une zone du carter en forme de cuve, servant à la lubrification du palier lisse radial.
